Europäisches Patentamt

European Patent Office

Office européen des brevets

(11) Publication number: **0 478 851 A1**

## EUROPEAN PATENT APPLICATION

(21) Application number: **90310715.9**

(22) Date of filing: **01.10.90**

(51) Int. Cl.⁵: **F21M 3/14**, B60Q 1/14

(43) Date of publication of application:
**08.04.92 Bulletin 92/15**

(84) Designated Contracting States:
**AT BE CH DE DK ES FR GB IT LI LU NL SE**

(71) Applicant: **CANADIAN AUTOMOTIVE SAFETY PRODUCTS Ltd.**
**P.O. Box 43**
**New Lowell, Ontario LOL 1LO(CA)**

(72) Inventor: **Stewart, John B.**
**R.R. No. 2**
**Cookstown, Ontario L0L 1LO(CA)**

(74) Representative: **Horner, Martin Grenville et al**
**Cruikshank & Fairweather 19 Royal**
**Exchange Square**
**Glasgow G1 3AE Scotland(GB)**

(54) **Attachment for headlights.**

(57) A glare controlling device (20) for use with focussed headlamps used on vehicles to illuminate the path ahead, the device having a light transmitting structure (22, 24, 26) defining openings and attachment means (30,32,34,36) coupling the structure to the headlamp in locating contact with focussing bosses on the headlamp, the structure being positioned with the openings in alignment with light travelling in illuminating paths, and the structure being in line with light travelling along glare paths to modify the light along the glare paths by changing the colour of the light.

FIG.2

This invention relates to headlamps and to providing a passive glare controlling device for modifying light transmitted along glare paths and to allow essentially all of the light transmitted along illumination paths to pass through the device unaffected by the device.

Although in this description a road vehicle would be used to illustrate the invention, it is to be appreciated that glare from headlamps of vehicles generally has been an undesirable and inevitable consequence of using lightbulbs and focused beams for illumination. When automobiles first came into common use headlamps were provided simply to illuminate the path ahead for the driver. There was little traffic so that the only difficulty was when a driver was confronted with a vehicle coming in the opposite direction, making it difficult for the driver to see the road ahead. This condition has been identified as "dazzle", which is identified for the purposes of this description as light emanating from the headlamp and pointing ahead and incidently at a vehicle such that it affects the ability of that vehicle's driver to see. "Glare" is a slightly different problem in that this is peripheral light which is scattering from the headlamp outside the range of the beam used to see the path ahead. Glare has some effect on oncoming drivers, but it also is reflected back by snow, sleet, rain or fog and this makes it most difficult for a driver to see where the driver is going in such conditions.

In early headlamp structures, dazzle was controlled in a number of different ways. The headlamps were simply reflectors with rather crude bulbs and a glass front, and although the reflectors were approximately parabolic in shape, the light focused poorly because of the bulk of the bulb. As a result, the beam of illuminating light was associated with significant glare. The light was controlled in a number of different ways. Examples of devices which were placed in the light for adjustment to cover the beam in the event of an oncoming vehicle are shown in many prior patents. Examples of these are U.S. patents 1,269,548; 1,434,302; 1,464,884; 1,467,194; 1,537,219; 1,582,326; 1,607,394; 1,637,608; 1,659,409; and 2,065,814. All of these foergoing patents teach structures which are placed in the beam and which may be adjusted when needed to dim the beam to reduce dazzle. Other approaches included tilting the headlamps downwardly either as a complete unit or by moving the bulb. An example where the bulb and reflector are adjusted together is shown in US Patent 1,486,616. This patent also shows a form of slat or louver to better focus the light.

The state of the art progressed to the use of double filaments, one for use in projecting a beam downwardly (sometimes known as a "dipped" beam) and another filament for projecting the beam more or less horizontally (sometimes known as a "high" beam). This was a solution to the dazzle problem but in common with all the prior art structures, the peripheral glare was not addressed directly since it is not a particular problem for oncoming traffic. Again using the terminology of the present description, the continued development of headlamps resulted in an approach to a sealed beam unit in which there is a single element and the unit is designed to be either a dipped beam or a high beam. Two pairs of each unit are used in a vehicle to provide a full headlamp system and these have become a common approach to controlling headlamps accurately and providing beams which have minimal dazzle problems and, to some extent, control of glare.

Turning now to the problem of glare with modern headlamps as opposed to dazzle, glare is more a problem for a driver of the vehicle than it is for someone approaching from the opposite direction. However, there are some benefits from glare. Firstly, the glare does of course provide some illumination of peripheral objects such as trees, hedgerows, and secondly, because of the scatter of the light, a vehicle is more readily seen from the front and side than it would otherwise be. Contrasting with these benefits is the fact that the driver's vision is often affected by glare, particularly in conditions such as fog, heavy rain, and snow. This is because the white light from the headlamps is reflected by moisture or snowflakes in the air, and this modifies the view seen by the driver to the extent that the illuminating light used to provide the beam does not have sufficient contrast with surrounding conditions and the driver cannot see clearly the road ahead.

It is an object of the present invention to maintain the benefits of glare while at the same time modifying its affect on the driver so that the driver is able to continue more safely in rain, fog, snow and such conditions. Accordingly, the invention provides a glare controlling device for use with focussed headlamps used on vehicles to illuminate the path ahead, the device having a light transmitting structure defining openings and attachment means coupling the structure to the headlamp in locating contact with focusing bosses on the headlamp, the structure being positioned with the openings in alignment with light travelling in illuminating paths, and the structure being in line with light travelling along glare paths to modify the light along the glare paths by changing the colour of the light.

The invention will be better understood with reference to the drawings, in which:

    Fig. 1 is an isometric view of a preferred embodiment of a glare controlling device according to the invention, parts being exploded and portions broken away to better illustrate the device;
Fig. 2 is also an isometric view and showing the device during assembly on a headlamp surround with the headlamp removed for clarity;
Fig. 3 is a view on line 3-3 of Fig. 2 suitably cut away to show details with the headlamp in place and the device assembled;
Fig 4 is a table illustrating a tabulation of candlepowers at various angles to the horizontal for both upper and lower beam headlamps; and
Fig. 5 is a table showing variations in illumination with the device off-line and located.

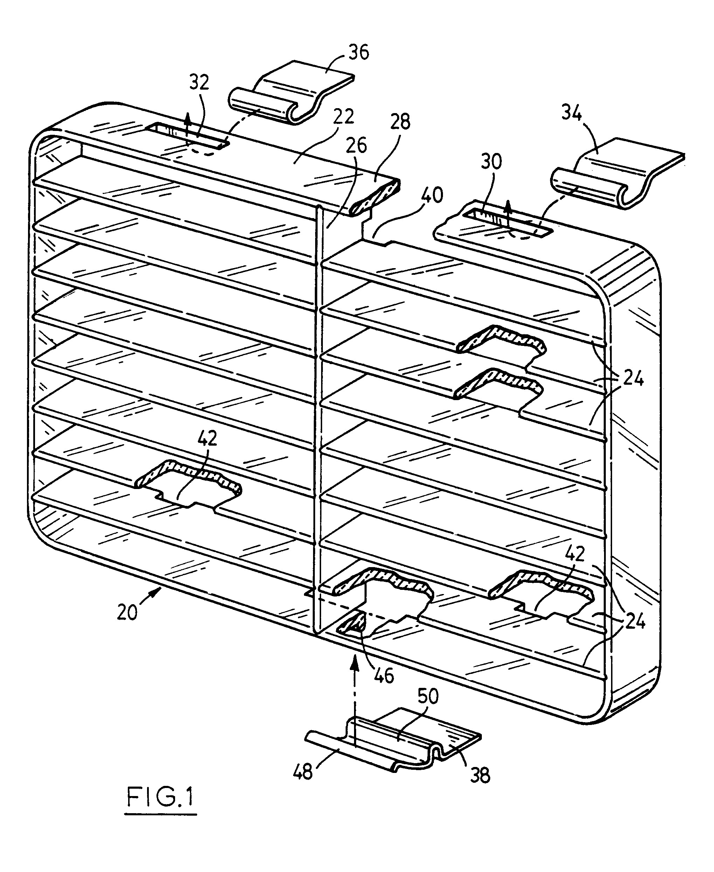

Reference is made firstly to Fig. 1 in which it will be seen that the device is designated generally by the numeral 20 and consists of a peripheral wall 22 curved at the corners and defining generally a rectangle, and a series of horizontal slats 24 spaced apart and running between vertical portions of the wall 22 and supported centrally by an intermediate wall 26. A top portion 28 of the peripheral wall defines a pair of slots 30,32 of similar proportions and spaced apart to receive respective ones of a pair of hangers 34,36. As will be described, these hangers are used to suspend the device in front of a headlamp.

The device is also retained in place on the headlamp by a clip 38 which is positioned at the bottom of the device as will be more fully described later.

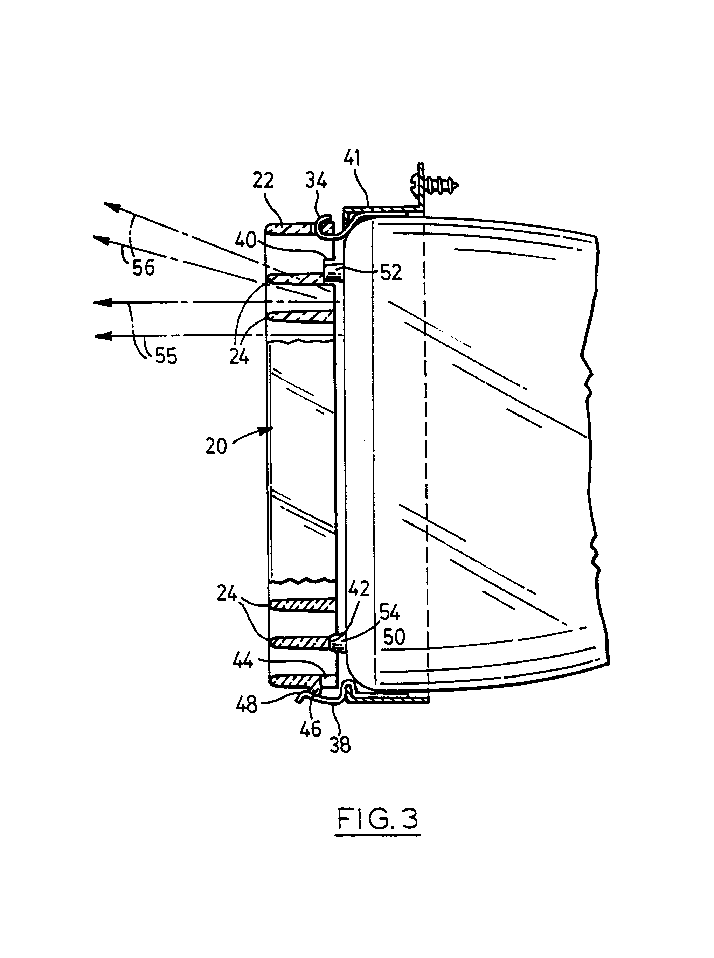

It will be seen in Fig. 1 that the top slat as drawn in Fig. 1, is cut away where it meets the intermediate wall 26 to form a recess 40 and the second from bottom slat 24 is cut away to form to additional recesses 42. The resulting three recesses 40, 42 are positioned for location on the bosses normally found on a rectangular fixed beam headlamp for focusing the headlamps, as will be described with reference to Fig.3.

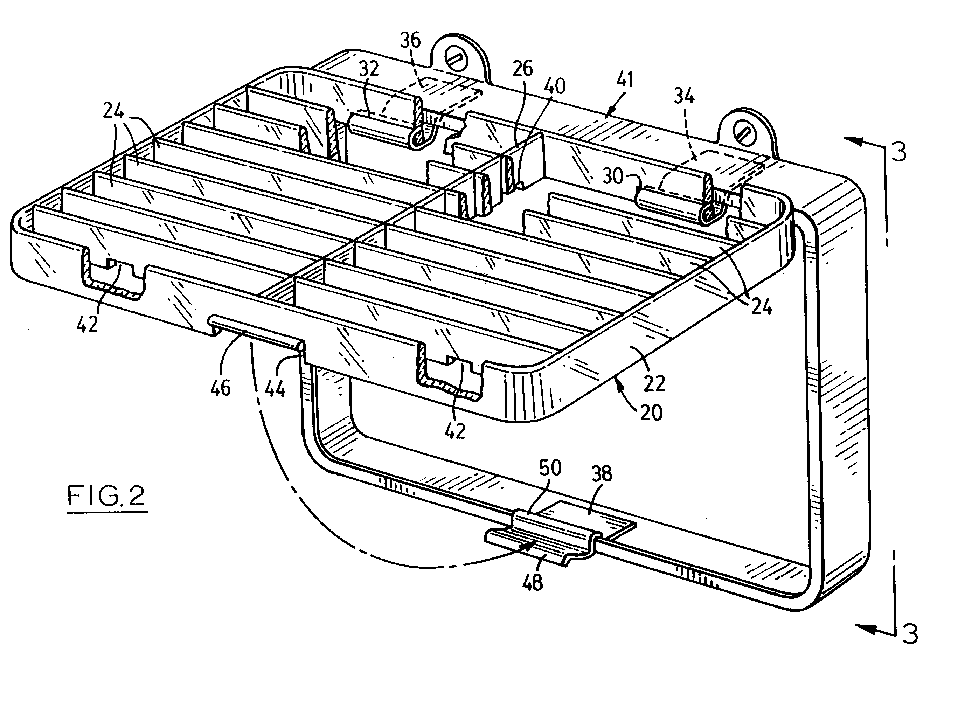

Turning now to Fig.2, it will be seen that the device is added to a retaining bezel 41 which normally exists to hold a headlamp in place, as seen in Fig. 3. The bezel is a loose fit about the headlamp and there is sufficient space to receive flat end portions of the hooked hangers 34, 36 and a similar portion of the clip 38 between the bezel and the headlamp, located as seen in Fig. 2.

The hangers 34, 36 can be assembled to the device proper first and then, after loosening the bezel, the hangers and clip 38 are positioned and the bezel tightened so that the device is then as shown in Fig. 2. This view shows a cutout 44 in the wall 22 and adjacent to intermediate wall 26 to provide clearance for the clip 38. A bead 46 is provided on the edge of the cut out for engagement under a lip 48 on the clip 38, which is engaged positively on the bezel by a tight U-shaped portion 50, which, because of its inherent resilience, grips the bezel and is thereby located.

After assembly as shown in Fig. 2, the device is closed by rotating it downwardly so that the bead 46 is engaged over the lip 48 as seen in Fig 3, to which reference is now made.

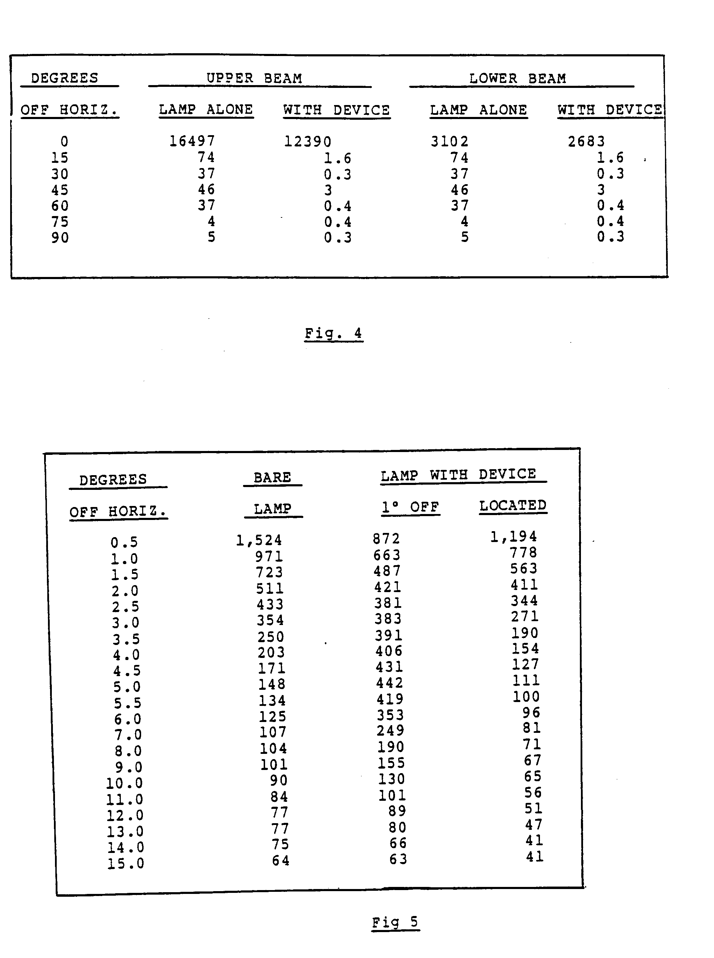

As will be explained, the location of the device on the headlamp is most desirable for minimising losses in illumination. To achieve this the device locates on three focussing bosses 52 and 54 (one of which is seen), with the bosses in respective recesses 40, 42. The hangers 34, 36 and the clip 38 combine to retain the device hard up against the bosses 52, 54 and therefore properly located in alignment with the light beam from the headlamp. The effect of this alignment and location will be demonstrated with reference to the table in Fig. 5.

Fig. 3 also illustrates some light rays forming parts of respective beams. Rays designated generally by numeral 55 pass through the device between slots 24 to form parts of the illumination path of the headlamp. Other rays indicated at 56 pass through the slats which are tinted brown, and as a result these rays are coloured. The rays 56 are in a glare path, and because some of the visual spectrum is absorbed by passage through the slat, the light loses its intensity and reflects less off rain, snow, sleet, fog or the like. As a result the driver receives less reflected light so that there is a greater contrast between desirable light in the illumination path, and undesirable glare.

It should also be noted that there is nevertheless some light (albeit modified by the device) being scattered and this enhances the awareness other people have for the vehicle. In other words, a person approaching the vehicle somewhat from the side and front will see light from the headlamp and this is a desirable safety feature. By contrast simple opaque louvres and the like will not give this effect.

Reference is next made to Fig. 4 which illustrates the candlepowers at different angular displacements from the direction of the beam for both an upper beam and a lower beam. For both beams it will be seen that the candlepower off the axis drops significantly with the device in place. As a result, light which does pass through the device has a lower candlepower, and because the device affects it, there is less likelihood of glare reflection to the driver.

Fig 5 illustrates the importance of having the device located on the headlamp. One column of this figure shows the candlepower of a bare lamp for various angular deviations upwardly from horizontal; a second shows the effect of a device which is misaligned by one degree; and a third the effect of a device which is properly located to be at right angles to the beam from the headlamp, and which is resting on the focussing bosses described earlier. The misaligned device seems to cause a lot of scatter, whereas when it is aligned properly the illuminating light path is strong and light in glare paths is controlled. Clearly proper alignment enhances the ability of the device.

A typical device covers a headlamp which measures about 6 x 4 inches, the device is 0.5 inch deep and having 8 slats. The material employed is a natural-brown coloured polycarbonate which is semi-transparent.

This and other structures are within the scope of the invention as claimed.

**Claims**

1. A glare controlling device for use with focussed headlamps used on vehicles to illuminate the path ahead, the device having a light transmitting structure defining openings and attachment means coupling the structure to the headlamp in locating contact with focussing bosses on the headlamp, the structure being positioned with the openings in alignment with light travelling along illuminating paths, and the structure being in line with light travelling along glare paths to modify the light along the glare paths by changing the colour of the light.

2. A device is claimed in claim 1 in which the structure includes slats defining said openings.

3. A device as claimed in claim 1 in which the attachment means includes a pair of hangers permitting the device to be moved angularly about the hangers.

4. A device as claimed in claim 3 in which the attachment means further comprises a clip to retain the device against the focussing bosses on the headlamp.

5. A device as claimed in claim 1 in which the device defines recesses to receive the focussing bosses.

6. A device as claimed in claim 1 in which the attachment means comprises hangers and clips which are adapted to be secured between the headlamp and an associated bezel.

7. A device as claimed in claim 1 in which the material of the device modifies the light along the glare paths to have a brown colouration which has poor reflective qualaities on snow, rain, sleet or the like.

FIG.1

FIG.2

FIG.3

| DEGREES | UPPER BEAM | | LOWER BEAM | |
|---|---|---|---|---|
| OFF HORIZ. | LAMP ALONE | WITH DEVICE | LAMP ALONE | WITH DEVICE |
| 0 | 16497 | 12390 | 3102 | 2683 |
| 15 | 74 | 1.6 | 74 | 1.6 |
| 30 | 37 | 0.3 | 37 | 0.3 |
| 45 | 46 | 3 | 46 | 3 |
| 60 | 37 | 0.4 | 37 | 0.4 |
| 75 | 4 | 0.4 | 4 | 0.4 |
| 90 | 5 | 0.3 | 5 | 0.3 |

Fig. 4

| DEGREES | BARE | LAMP WITH DEVICE | |
|---|---|---|---|
| OFF HORIZ. | LAMP | 1° OFF | LOCATED |
| 0.5 | 1,524 | 872 | 1,194 |
| 1.0 | 971 | 663 | 778 |
| 1.5 | 723 | 487 | 563 |
| 2.0 | 511 | 421 | 411 |
| 2.5 | 433 | 381 | 344 |
| 3.0 | 354 | 383 | 271 |
| 3.5 | 250 | 391 | 190 |
| 4.0 | 203 | 406 | 154 |
| 4.5 | 171 | 431 | 127 |
| 5.0 | 148 | 442 | 111 |
| 5.5 | 134 | 419 | 100 |
| 6.0 | 125 | 353 | 96 |
| 7.0 | 107 | 249 | 81 |
| 8.0 | 104 | 190 | 71 |
| 9.0 | 101 | 155 | 67 |
| 10.0 | 90 | 130 | 65 |
| 11.0 | 84 | 101 | 56 |
| 12.0 | 77 | 89 | 51 |
| 13.0 | 77 | 80 | 47 |
| 14.0 | 75 | 66 | 41 |
| 15.0 | 64 | 63 | 41 |

Fig 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 129 537 (K.R. HIPWOOD)<br>* Whole document *<br>– – – | 1,2,7 | F 21 M 3/14<br>B 60 Q 1/14 |
| A,D | US-A-1 537 219 (EVAN BERG)<br>* Claim 1; figure 3 *<br>– – – | 1,2 | |
| A,D | US-A-1 434 302 (G.R. MARCOTTE)<br>* Figure 2 *<br>– – – – – | 1,2,3 | |
| | | | TECHNICAL FIELDS SEARCHED (Int. Cl.5) |
| | | | F 21 M<br>F 21 V<br>B 60 Q |

The present search report has been drawn up for all claims

| Place of search | Date of completion of search | Examiner |
|---|---|---|
| The Hague | 22 May 91 | DE MAS A.G. |